# EUROPEAN PATENT APPLICATION

(11) **EP 4 768 906 A1**
(43) Date of publication of application: **01.07.2026**
(21) Application number: 25216562.6
(22) Date of filing: 18.11.2025
(51) Int. Cl.: G01N 29/22, G01N 29/265, G01N 29/28

(54) **SCANNING ACOUSTIC MICROSCOPY**

(30) Priority: 28.12.2024 US 202419004317
(71) Applicant: INTEL Corporation, Santa Clara, CA 95054 (US)
(72) Inventor: BAKRE, Chaitanya, Chandler, AZ 85286 (US); PACHECO, Mario, Tempe, AZ 85284 (US); MURUGAIAH, Nagaratnam, Tempe, AZ 85284 (US); KANA KANA, Jean Bosco, Chandler, AZ 85225 (US); GOYAL, Deepak, Phoenix, AZ 85048 (US)
(74) Representative: HGF

(57) **Abstract**

Provided is an acoustic scan apparatus that includes a fluid circulation structure to facilitate sufficient acoustic coupling between a transducer and a die surface and at the same time, limits the amount of fluid contacting part of the die not desired to be contacted.

## Description

### TECHNICAL FIELD

Embodiments relate to the field of semiconductor testing apparatuses; and more specifically, to scanning acoustic microscopy.

### BRIEF DESCRIPTION OF THE DRAWINGS

The disclosure may best be understood by referring to the following description and accompanying drawings that are used to illustrate embodiments. In the drawings:
Fig. 1 is a schematic diagram showing a conventional scanning acoustic microscopy test apparatus.
Figs. 2A and 2B are schematic diagrams showing a scanning acoustic microscopy apparatus in accordance with some embodiments.
Figs. 3A-3C are diagrams showing transducer housings with different features in accordance with some embodiments.
Fig. 4 is a schematic diagram depicting a transducer housing with a trailing hot air knife in accordance with some embodiments.

### DETAILED DESCRIPTION

Scanning acoustic microscopy (SAM) is an industry-utilized nondestructive technique for defect screening of microelectronic packages. The current C-mode scanning acoustic microscopy (CSAM) technique for inspecting semiconductor Integrated Circuit (IC) packages involves unavoidably exposing the package underside contacts (e.g., land grid array, LGA) to water and some level of land pad corrosion that results in otherwise good IC (integrated circuit) packages being damaged and not suitable for sale.

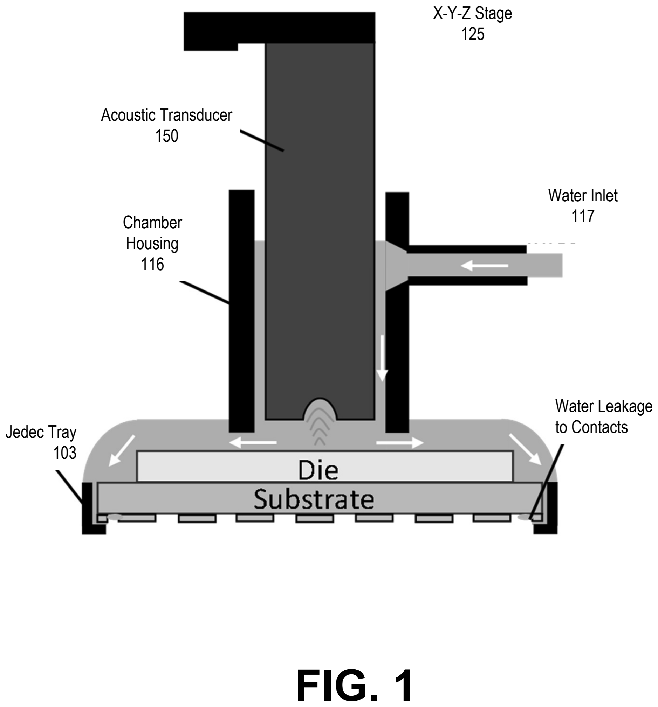

Fig. 1 is a schematic diagram showing a conventional scanning acoustic microscopy test apparatus. The apparatus includes an acoustic transducer 150 mounted to an X-Y-Z stage 125 for scanning a wafer for defects. The transducer 150 is disposed within a fluid chamber 116 that receives a transducer coupling fluid (e.g., water) from a water inlet 117.

The acoustic transducer mechanically scans over the IC package under inspection. The transducer emits and receives a focused ultrasonic beam to inspect the microelectronic package, and any discontinuity, such as subsurface voids, cracks, and delamination, alters the amplitude of the reflected beam and can thereby be used to detect subsurface defects. This technique necessitates the presence of a transducer coupling medium, typically water, for the propagation of high-frequency ultrasonic waves from the transducer to the IC package. For example, anywhere from 50 or so microns to 2 or so milli-meters of coupling fluid should be disposed between the head of the transducer and the top target surface of the IC package for good acoustic conduction.

Unfortunately, as is depicted in the figure, the water, which sits atop the package, can seep around its sides and beneath the package to the underside contacts (e.g., land grid array, LGA). The base copper pads in a LGA are typically plated with Nickel (Ni) as a barrier layer followed by Palladium (Pd) and with Gold (Au) as the topmost layer to provide good electrical contact and for corrosion protection when in contact with moisture. However, factors such as imperfections in the plating, plating quality/thickness, and water quality, such as pH level and conductivity, make the Ni/Pd/Au plated & copper pads susceptible to corrosion. Furthermore, due to the difference in the coefficients of thermal expansion (CTE) between the metal land pads and the solder resist on the substrate, cracks may be formed around the lands, leading to water seepage and corrosion. Water in the crevices can promote NiO and CuO, which deposit on the gold surface as stains that make them rejectable. It also increases contact resistance, resulting in an open circuit. The semiconductor industry today faces the significant challenge of the corrosion of Nickel and copper in the pads during CSAM operation. This results in aesthetic stain issues and electrical contact issues, thus deteriorating the integrity and functionality of the package, resulting in yield losses.

Previous solutions for this corrosion have been to focus on ensuring effective drying of the package post CSAM operation. However, this method has not been able to completely eliminate the corrosion. As soon as the land pads are exposed, water galvanic corrosion sets in and subsequent focus on drying only reduces it but cannot eliminate it. The current duration for drying is at ~20 minutes; any further increase in duration does not effectively work to reduce the corrosion, but it does degrade the overall capacity of the CSAM tool. With conventional designs, water entrapment between the edges of the package and the JEDEC tray, or media, is unavoidable and thus, corrosion is inevitable.

Another approach has been to employ an additional process step to clean the surface by fluxing followed by reflowing the packages in the oven and then de-fluxing the reflowed surface (FRD). However, this is an additional process step and increases the cycle time for producing units during high volume manufacturing. Accordingly, new solutions are desired.

In some embodiments, a housing with inlet and outlet chambers to cycle fluid (hereinafter referred to as water for convenience) from a water inlet, through a transducer incident area, and out through a water outlet is presented. The water flows in from the inlet port, creating a water path/channel that allows propagation of the acoustic beam. The water is vacuumed out from the water outlet port to prevent it from problematically seeping around the package, or device, under test (DUT). Thus, a small area on the top side die surface of the package momentarily encounters water, but the recirculation structure keeps the package sides substantially dry, avoiding water flowing down into the LGA pads.

In some embodiments, a SAM apparatus may additionally include an in-situ hot air dryer (also referred to as hot knife or nozzle) to dry away any residual thin film of water post scanning. The air pressure, angulation of the nozzle and temperature work together to substantially dry packages without a need for further drying in an oven.

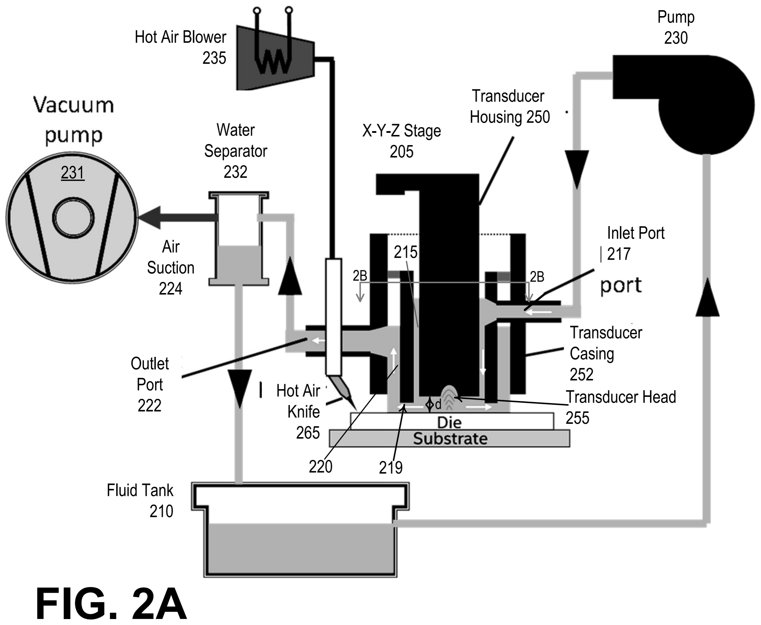

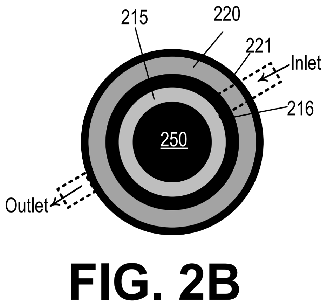

Figs. 2A and 2B are schematic diagrams showing a scanning acoustic microscopy apparatus in accordance with some embodiments. Fig. 2A is a side schematic view, and Fig. 2B is a top schematic view taken along a cross-section 2B-2B from Fig. 2A.

The apparatus generally includes a transducer housing 250 (with an acoustic transducer) disposed within a water circulation structure that includes an inlet chamber 215 formed from an inlet housing 216 that includes an inlet water port 217. The water circulation structure also includes an outlet chamber 220 formed from an outlet housing 221 with a water outlet port 222. The transducer housing 250 and water circulation structure are mounted to an X-Y stage 205 for controllable lateral (X-Y) motion to perform scanning over the upper surface of the wafer, which is acoustically coupled through the water to a transducer head 255. (Note that while the X-Y stage is shown mounted to the water circulation structure and transducer housing, it could alternatively be mounted to the die securing tray to move the die, relative to the transducer head, instead of moving the transducer head, relative to the die. Note also that the transducer housing and water circulation structure are described as distinct structures but in some embodiments, they may be formed from a common, e.g., molded unitary structure defining the transducer housing, and inlet and outlet chambers, along with other features of the water circulation system. Accordingly, embodiments include a transducer housing that is part of the water circulation structure, as well as embodiments with separate water circulation and transducer housing structures.)

The depicted apparatus includes a water pump 230 to pump water into the inlet 217 and a vacuum pump (side channel blower) 231, with water separator 232, to generate a vacuum. The depicted apparatus also includes a hot air knife 265, coupled to hot air blower 235, to dry any residual water not evacuated through the outlet 222.

The water circulation pump 230 maintains tank water levels and quality through filtration. The pump 230 is coupled to the inlet port 217 on the inlet housing of the transducer housing for an uninterrupted water supply from the water tank, with the flow rate controlled by adjusting the pump(s) speed and/or valves at the inlet and/or outlet ports.

The transducer housing 250 houses the acoustic transducer and includes the water inlet and outlet housings (216, 221) with their associated ports (217, 222) respectively. There is a small planer gap 219 near the surface of the wafer that allows water to flow from inlet to outlet chambers and between the transducer and the surface of the semiconductor package, creating a water path for acoustic wave propagation. The water is then drawn back into the outlet chamber by the suction generated by a side channel blower (vacuum pump) 231.

The water separator 232 removes air from the water drawn through the water outlet port 222 before it reaches the side channel blower (vacuum pump) 231. The separated water flows back into the water tank, thus making it a closed-loop system.

The vacuum pump 231 is a side-channel blower that can handle significant amounts of air mixed with water. It generates airflow and a vacuum, drawing water from the surface of the semiconductor package through the outlet port 222 on the transducer housing. The vacuum pump speed controls the suction forces. The hot air knife 265, a trailing hot air blow-off nozzle, dries off any residual film of water on the scanned areas not drawn back through the outlet.

In some embodiments, the depicted apparatus may be independently constructed or implemented as a retrofit to an existing CSAM tool. The retrofit may be a closed-loop water circulation system that can include a water circulation pump, a transducer housing to facilitate inlet and outlet chambers, a water separator, a vacuum pump, an in-situ hot air blow-off to dry residual water film, and any suitable combination of the same.

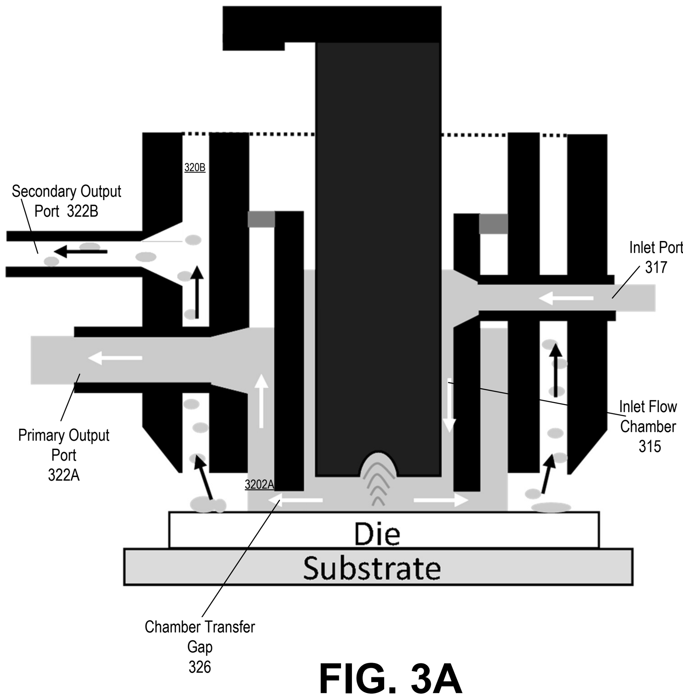

Figs. 3A-3C are diagrams showing transducer housings with different features in accordance with some embodiments. Shown are different transducer housing designs aimed at enhancing functionality and reliability to prevent water from leaking to the underside contacts of a semiconductor package. It must be noted that the configurations presented below can be combined in any suitable manner.

Fig. 3A is a diagram showing a housing with an inlet and first and second (e.g., primary, secondary) outlet chambers. Multiple annular suction chambers (or zones) can be implemented to encompass a primary suction zone. Fig. 3A illustrates a configuration with a secondary annular suction zone 320B encompassing the primary one. These additional suction zones can effectively capture water droplets that may have evaded the primary suction zone. Each annular suction chamber (zone) includes an outlet port (322A, 322B) equipped, in some embodiments, with a valve for precise suction rate control and can link to the same vacuum pump line.

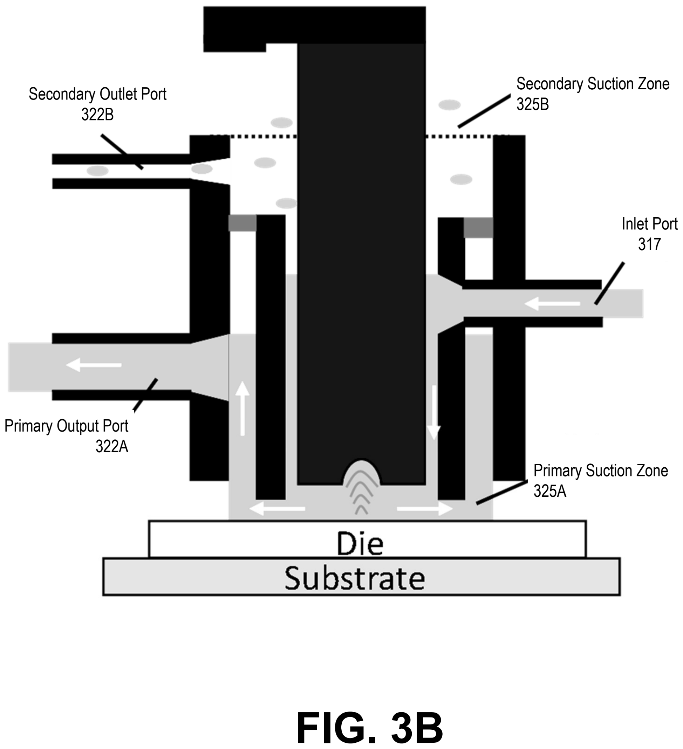

Fig. 3B shows a housing with suction zones (325A, 325B) in the bottom and the top regions of the transducer. This configuration is capable of generating suction below and above the transducer. It addresses scenarios like sudden increases in the inlet water rate, high flow rates, or resistance to smooth water flow beneath the transducer, which can lead to water leakage around the top of the transducer and back onto the semiconductor package being inspected. By incorporating suction from above the casing, the design can better mitigates such leaks.

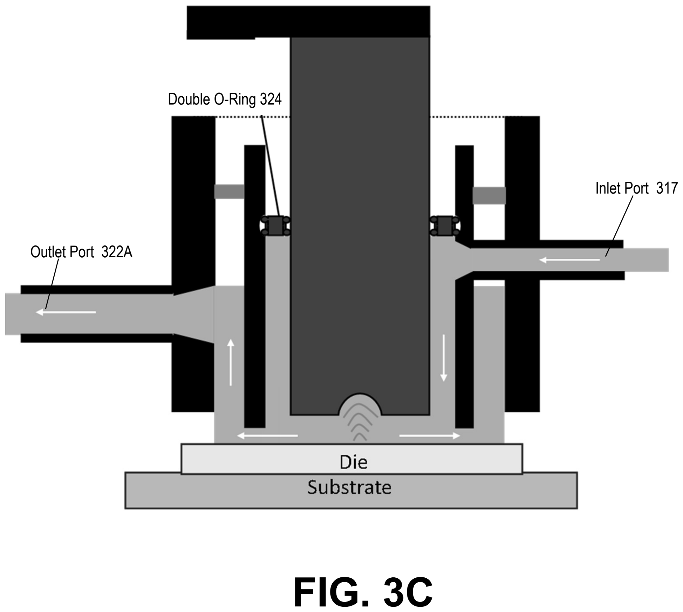

Fig. 3C is a diagram showing a housing with the use of O-rings in the transducer housing to inhibit water leakage. The figure shows an O-ring 324 in a cavity on the inner wall of the water inlet casing. The O-ring is disposed in a cavity on the inner wall of the annular water inlet chamber to prevent water overflow and ensure a snug fit between the transducer and the housing.

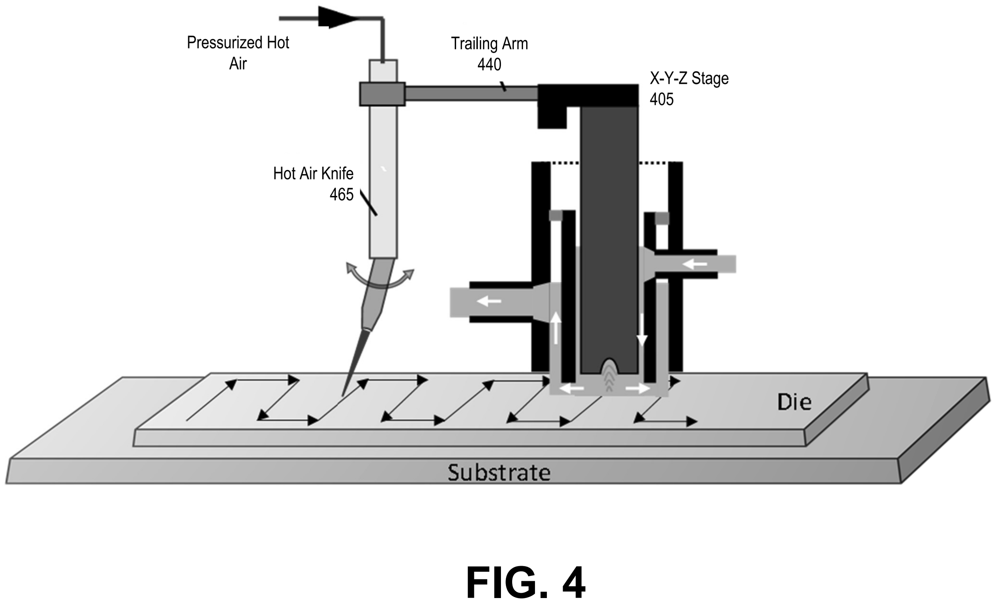

Fig. 4 is a schematic diagram depicting a transducer housing with a trailing hot air knife 465 scanning on a semiconductor package while concurrently facilitating the drying process. It highlights concurrent drying during CSAM scanning via a hot air knife 465 attached to a trailing arm 440 following the transducer path. Multiple hot air knives, oriented vertically and obliquely, can enhance the drying effectiveness by removing residual water droplets on the semiconductor package surface missed by vacuum suction. This configuration can remove the need for a separate drying post-CSAM process step. The hot air knife(s) may be supplied with pressurized hot air (e.g., 232 from Fig. 2A) at controlled temperature and pressure.

Illustrative examples of the technologies disclosed herein are provided below. An embodiment of the technologies may include any one or more, and any compatible combination of, the examples described below.

Example 1 is an apparatus that includes a fluid circulation structure. It also includes a transducer mounted within the fluid circulation structure, the transducer has a transducer head to be acoustically coupled with a die surface through a coupling fluid to be circulated by the fluid circulation structure to prevent the fluid from seeping below the die.

Example 2 includes the subject matter of example 1, and including an X-Y stage mounted to the transducer and fluid circulation structure to controllably move the transducer head laterally with respect to the die surface.

Example 3 includes the subject matter of any of examples 1-2, and including an X-Y stage mounted to a die-holding tray to controllably move the die laterally with respect to the transducer head.

Example 4 includes the subject matter of any of examples 1-3, and wherein the fluid circulation structure includes an inlet chamber with an inlet fluid port and an outlet chamber, with a fluid outlet port, to draw the fluid from the inlet chamber, over at least a portion of the die surface, and out through the outlet chamber.

Example 5 includes the subject matter of any of examples 1-4, and wherein the inlet and outlet chambers are annular over-lapping chambers with a common longitudinal axis.

Example 6 includes the subject matter of any of examples 1-5, and wherein the transducer is longitudinally aligned with the common longitudinal axis and is disposed within the inlet chamber.

Example 7 includes the subject matter of any of examples 1-6, and wherein the outlet chamber is a first outlet chamber, and the apparatus comprising a second outlet chamber that is coaxially aligned with the first outlet chamber to draw the fluid from the inlet chamber.

Example 8 includes the subject matter of any of examples 1-7, and wherein the inlet chamber has a gasket to prevent the fluid from escaping an upper portion of the water circulation structure.

Example 9 includes the subject matter of any of examples 1-8, and wherein the fluid circulation structure has a first suction zone at the transducer head and a second suction zone at an opposite end of the transducer head.

Example 10 includes the subject matter of any of examples 1-9, and wherein the fluid is water.

Example 11 includes the subject matter of any of examples 1-10, and wherein the transducer is an acoustic transducer for C-type scanning acoustic microscopy.

Example 12 is an apparatus that includes an inlet chamber with an inlet fluid port. It also includes an outlet chamber with a fluid outlet port. The outlet chamber is fluidly coupled to the inlet chamber through a gap at an end of the inlet chamber to draw the fluid from the inlet chamber through the outlet chamber out of the outlet port. The apparatus also includes a tray to hold a die at the end of the inlet chamber so that an exposed surface of the die receives the fluid as it passes from the inlet chamber to the outlet chamber.

Example 13 includes the subject matter of example 12, and wherein the inlet and outlet chambers are annular over-lapping chambers with a common longitudinal axis.

Example 14 includes the subject matter of any of examples 12-13, and comprising an acoustic transducer that is longitudinally aligned with a common longitudinal axis of the inlet and outlet chambers and is disposed within the inlet chamber.

Example 15 includes the subject matter of any of examples 12-14, and wherein the outlet chamber is a first outlet chamber, and the apparatus comprises a second outlet chamber that is coaxially aligned with the first outlet chamber to draw the fluid from the inlet chamber.

Example 16 includes the subject matter of any of examples 12-15, and wherein the inlet chamber has a gasket to prevent the fluid from escaping out of an upper portion of the inlet chamber.

Example 17 includes the subject matter of any of examples 12-16, and including an X-Y stage mounted to the transducer and inlet and outlet chambers to controllably move the transducer laterally with respect to the exposed die surface.

Example 18 includes the subject matter of any of examples 12-17, and comprising a hot air knife directed at the exposed surface to blow onto it hot air.

Example 19 is a method that includes acoustically scanning a die surface with an acoustic transducer; circulating a fluid over the surface so that the transducer remains in contact with the surface through the fluid; and blowing air onto the die surface to remove residual fluid.

Example 20 includes the subject matter of example 19, and wherein circulating a fluid over the surface includes pumping the fluid into an inlet chamber and drawing it into first and second outlet chambers.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

As defined herein, the term "processor" means at least one hardware circuit configured to carry out instructions contained in program code. The hardware circuit may be implemented with one or more integrated circuits. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth. It should be appreciated that a logical processor, on the other hand, is a processing abstraction associated with a core, for example when one or more SMT cores are being used such that multiple logical processors may be associated with a given core, for example, in the context of core thread assignment.

It should be appreciated that a processor or processor system may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

As defined herein, the term "if" means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. An apparatus, comprising:
a fluid circulation structure; and
a transducer mounted within the fluid circulation structure, the transducer having a transducer head to be acoustically coupled with a die surface through a coupling fluid to be circulated by the fluid circulation structure to prevent the fluid from seeping below the die.

2. The apparatus of claim 1, including an X-Y stage mounted to the transducer and fluid circulation structure to controllably move the transducer head laterally with respect to the die surface.

3. The apparatus of any of claims 1 or 2, including an X-Y stage mounted to a die-holding tray to controllably move the die laterally with respect to the transducer head.

4. The apparatus of any of claims 1-3, wherein the fluid circulation structure includes an inlet chamber with an inlet fluid port and an outlet chamber, with a fluid outlet port, to draw the fluid from the inlet chamber, over at least a portion of the die surface, and out through the outlet chamber.

5. The apparatus of claim 4, wherein the inlet and outlet chambers are annular over-lapping chambers with a common longitudinal axis.

6. The apparatus of claim 5, wherein the transducer is longitudinally aligned with the common longitudinal axis and is disposed within the inlet chamber.

7. The apparatus of claim 5, wherein the outlet chamber is a first outlet chamber, and the apparatus comprising a second outlet chamber that is coaxially aligned with the first outlet chamber to draw the fluid from the inlet chamber.

8. The apparatus of claim 5, wherein the inlet chamber has a gasket to prevent the fluid from escaping an upper portion of the water circulation structure.

9. The apparatus of any of claims 1-8, wherein the fluid circulation structure has a first suction zone at the transducer head and a second suction zone at an opposite end of the transducer head.

10. The apparatus of any of claims 1-9, wherein the fluid is water.

11. The apparatus of any of claims 1-10, wherein the transducer is an acoustic transducer for C-type scanning acoustic microscopy.

12. A method, comprising:
acoustically scanning a die surface with an acoustic transducer; and
circulating a fluid over the surface so that the transducer remains in acoustic contact with the surface through the fluid .

13. The method of claim 12, including blowing air onto the die surface to remove residual fluid.

14. The method of any of claims 12-13, wherein circulating a fluid over the surface includes pumping the fluid into an inlet chamber and drawing it through first and second outlet chambers.

15. The method of any of claims 12-14, comprising blowing a heated gas onto the surface.
